# EUROPÄISCHE PATENTSCHRIFT

(11) **EP 1 186 120 B1**
(45) Veröffentlichungstag und Bekanntmachung des Hinweises auf die Patenterteilung: **08.01.2003**
(21) Anmeldenummer: 00985045.4
(22) Anmeldetag: 16.11.2000
(51) Int. Cl.: H04B 7/08, H04L 1/06

(54) **DECT-SENDE/EMPFANGS-ENDGERÄT UND VERFAHREN ZUM KOMMUNIZIEREN ZWISCHEN EINEM DECT-SENDE/EMPFANGS-ENDGERÄT UND EINER DECT-BASISSTATION**
DECT TRANSMITTING-RECEIVING TERMINAL AND METHOD FOR COMMUNICATING BETWEEN A DECT TRANSMITTING-RECEIVING TERMINAL AND A DECT BASE STATION
EMETTEUR/RECEPTEUR DECT ET PROCEDE POUR COMMUNIQUER ENTRE UN EMETTEUR/RECEPTEUR DECT ET UNE STATION DE BASE DECT

(30) Priorität: 30.11.1999 DE 19957595; 30.11.1999 DE 29921022 U
(43) Veröffentlichungstag der Anmeldung: 13.03.2002
(73) Patentinhaber: FRAUNHOFER-GESELLSCHAFT ZUR FÖRDERUNG DER ANGEWANDTEN FORSCHUNG E.V., 80636 München (DE)
(72) Erfinder: HUPP, Jürgen, 90425 Nürnberg (DE); REBHAN, Klaus, 91052 Erlangen (DE); NÖTHER, Frank, 90443 Nürnberg (DE); TITTEL, Martin, 91301 Forchheim (DE); STÖRMER, Udo, 91052 Erlangen (DE); KLEINHENZ, Thomas, 90439 Nürnberg (DE); HEUBERGER, Albert, 91056 Erlangen (DE); GERHÄUSER, Heinz, 91344 Waischenfeld (DE)
(74) Vertreter: Schoppe, Fritz, Dipl.-Ing.
(86) Internationale Anmeldenummer: EP0011381
(87) Internationale Veröffentlichungsnummer: WO01041330

(56) Entgegenhaltungen:
- EP-A- 0 620 657
- EP-A- 0 755 131
- WO-A-94/10764
- WO-A-99/34535
- WO-A-99/38275

## Beschreibung

Die vorliegende Erfindung bezieht sich auf digitale Nachrichtenkommunikationen gemäß dem DECT-Standard und insbesondere auf ein Sende/Empfangs-Endgerät, das für eine verbindungsorientiertes Kommunikationssystem nach dem DECT-Standard oder einem seiner Derivate vorgesehen ist, sowie auf ein Verfahren zum Kommunizieren zwischen einem Sende/Empfangs-Endgerät und einer Basisstation, durch das eine Verbesserung der Kommunikationsverbindung erreichbar ist.

Der ETSI DECT-Standard (DECT = Digital Enhanced Cordless Telecommunications) sieht sowohl eine digitale Übertragung von Spachsignalen als auch eine digitale Übertragung von Daten vor. In diesem Standard (ETS 300 175, Teil 2-3) ist sowohl die physikalische Schicht, die auch als Physical Layer oder als PHL bezeichnet wird, sowie die Medienzugriffskontrollschicht, die auch als Medium Access Control Layer oder MAC bezeichnet wird, eines digitalen Kommunikationssystems beschrieben. Das DECT-Konzept arbeitet als zentral gesteuertes System, bei dem sich Mobilteile auf eine oder mehrere Basisstationen synchronisieren.

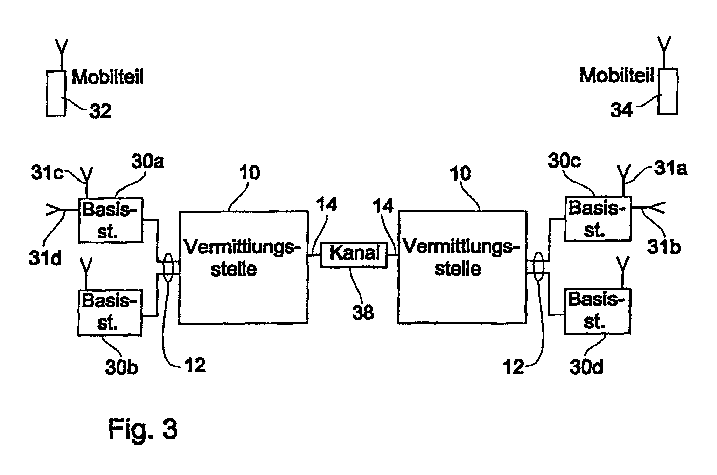

Im nachfolgenden wird bezugnehmend auf Fig. 3 ein Überblick über den Gesamtaufbau einer Nachrichtenverbindung zwischen einem ersten Mobilteil 32 und einem zweiten Mobilteil 34 beschrieben. Es wird davon ausgegangen, daß das Mobilteil 32 in Händen eines ersten Teilnehmers ist, und daß das Mobilteil 34 in Händen eines zweiten Teilnehmers ist, wobei beide Teilnehmer über ein DECT-System sowohl beim ersten Teilnehmer, also dem Mobilteil 32, als auch beim zweiten Teilnehmer, also dem Mobilteil 34, kommunizieren wollen.

Größere Telefonanlagen sind beispielsweise DECT-Systeme in einem Bürogebäude, die so ausgelegt sind, daß Personen, die sich in dem Gebäude aufhalten, ein schnurloses DECT-Mobilteil 32 bzw. 34 besitzen. Sind beispielsweise mehrere Personen mit DECT-Mobilteilen in einem Büro untergebracht, so wird dieses Büro auch eine Basisstation 30a-30d aufweisen, so daß die Funksignale, die von einem DECT-Mobilteil empfangen werden, bzw. zu einem DECT-Mobilteil gesendet werden, lediglich über die relativ kurze Strecke im Bezug auf die Gesamtverbindung zwischen einem jeweiligen Mobilteil und der in Funkreichweite angeordneten Basisstation übertragen werden müssen, um dann über entsprechende Umsetzer in der Basisstation in eine fest verdrahtete Leitung 12 eingespeist werden.

Sämtliche DECT-Basisstation 30a-30d, die beispielsweise in einzelnen Büros untergebracht sind, oder die auch in den einzelnen Stockwerken eines mehrstöckigen Bürogebäudes untergebracht sind, sind jeweils mit einer zentralen DECT-Vermittlungsstelle 10 fest verdrahtet verbunden. Die Vermittlungsstelle 10 stellt somit die Schnittstelle zwischen dem DECT-System des Bürogebäudes und der "Außenwelt" dar, d.h. dem öffentlichen ISDN-Telekommunikationsnetz, dem öffentlichen Analognetz, einem Stromverteilungsnetz oder einem sonstigen Netz, über das Daten übertragen werden. Ein solches sonstiges Netz könnte z.B. auch das Internet sein. Allgemein ist die "Außenwelt" bzw. das entsprechende Netz in Fig. 3 als Kanal 38 bezeichnet.

In Fig. 3 ist also die Situation dargestellt, bei der beide Gesprächsteilnehmer ein DECT-Mobilteil in Händen halten. Selbstverständlich könnte auf der einen Seite ein Teilnehmer mit einem DECT-Mobilteil sein, während auf der anderen Seite ein Gesprächsteilnehmer sitzt, der irgendein anderes Endgerät hat.

Im nachfolgenden wird auf die Kommunikation zwischen dem DECT-Mobilteil 34 und der Basisstation 30c eingegangen, wenn angenommen wird, daß das DECT-Mobilteil 34 in der Nähe der Basisstation 30c angeordnet ist und protokollmäßig dazu bestimmt ist, eben mit dieser Basisstation 30c zu kommunizieren.

Im ETSI DECT-Standard (ETS 300 175) ist vorgesehen, daß eine Basisstation eine erste Sende/Empfangsantenne 31a aufweist, und daß eine Basisstation ferner eine zweite Empfangsantenne 31b haben kann, um in der Kommunikation zwischen der Basisstation und dem Mobilteil 34 ein Antennen-Diversity zu erreichen. Das Antennen-Diversity mit zwei Antennen in der Basisstation 30c dient dazu, die Übertragungssicherheit zwischen der Basisstation 30c und dem Mobilteil 34 zu verbessern. Analog dazu kann auch die Basisstation 30a eine erste Sende/Empfangsantenne 31c und eine zweite Sende/Empfangsantenne 31d umfassen, um auch in der Kommunikation zum Mobilteil 32 ein Antennen-Diversity zu erreichen.

Nachteilig an dem im ETSI DECT-Standard beschriebenen Konzept ist, daß trotz der zur Verbesserung der Übertragungsqualität vorgesehenen Diversity-Möglichkeit in der Basisstation nach wie vor nicht immer zufriedenstellende Übertragungsqualitäten erreicht werden.

DECT-Mobilteile können auch autarke Mobilteile ohne Teilnehmer sein, wie z. B. Sensoren für diverse Zwecke, Bediengeräte, Drucker, Überwachungsgeräte und dergleichen. Bestimmte autarke Mobilteile, und insbesondere spezielle Sensoren, können fest eingebaut sein. Wenn die Kommunikationsverbindung zwischen dem Mobilteil und der Basisstation hier schlecht ist, besteht nicht die sogenannte "menschliche Regelschleife".

Wenn an Telefone gedacht wird, wird ein Telefonteilnehmer im Falle einer schlechten Kommunikationsverbindung im Sinne der "menschlichen Regelschleife" nahezu intuitiv seinen Standort wechseln, um eine bessere Übertragungsqualität zu erhalten. Dies scheidet jedoch für autarke Mobilteile ohne Bedienperson aus.

Für fest eingebaute Mobilteile existiert ferner das Problem, daß sie einmal fest eingebaut werden und dann in dieser festen Position kommunizieren sollen. Beim Einbau wird nicht zwangsläufig auf die Antennencharakteristik des Mobilteils bezüglich der Basisstation geachtet. Deshalb ist der Fall möglich, daß das Mobilteil derart ungünstig eingebaut wird, daß seine Antennenkeule sehr schlecht bezüglich der Basisstation, mit der das Mobilteil kommunizieren soll, positioniert ist. In diesem Fall und auch im Fall einer mobilen autarken Einheit wird das Antennendiversity der Basisstation nur sehr begrenzt Abhilfe schaffen.

Die WO 99/34535 offenbart ein verbessertes Antennen-Diversity-Umschaltsystem für TDMA-basierte Telefone. Bei DECT-Systemen können zwei Antennen in der Basisstation und/oder im Mobilteil vorhanden sein.

Die WO 94/10764 offenbart ein Verfahren und eine Anordnung zum Antennenauswahl-Diversity in einer Empfangseinrichtung eines schnurlosen Telefonsystems. Ein Mobilteil eines schnurlosen Telefons umfaßt mehrere Antennen. Ein zentraler Prozessor führt in Abhängigkeit gemessener Feldstärkewerte von empfangenen Signalen und in Abhängigkeit einer Überschreitung oder Unterschreitung von Schwellenwerten und/oder in Abhängigkeit erkannter Übertragungsfehler unterschiedliche Prozeduren zur Aktivierung einer von mehreren Antennen durch.

Die EP 0 620 657 A1 offenbart eine Antennenumschalt-Schaltung für einen Diversity-Empfänger. Auch dieses Dokument enthält keinen Hinweis auf die vorliegende Erfindung zugrundeliegende Problematik und legt daher den Gegenstand der vorliegenden Erfindung auch nicht nahe.

Die EP 0 755 131 A2 offenbart eine Vorrichtung zur Steuerung von Antennen auf der Basis einer RSSI-Messung, einer SYNC-Detektion oder einer Bit-Fehler-Detektion.

Die Aufgabe der vorliegenden Erfindung besteht darin, die Übertragungsqualität in einem System nach dem DECT-Standard oder nach einem Derivat des DECT-Standards zwischen einer Basisstation und einem Mobilteil zu verbessern.

Diese Aufgabe wird durch ein Sende/Empfangs-Endgerät nach Patentanspruch 1 und durch ein Verfahren zum Kommunizieren zwischen einem Sende/Empfangs-Endgerät und einer Basisstation gemäß Patentanspruch 9 gelöst.

Der vorliegenden Erfindung liegt die Erkenntnis zugrunde, daß der Übertragungskanal zwischen einer Basisstation und einem Mobilteil bzw. einen Sende/Empfangs-Endgerät nicht symmetrisch ist, d. h. daß die Ausbreitungscharakteristik des Kanals vom Mobilteil zur Basisstation nicht immer der Ausbreitungscharakteristik von der Basistation zum Mobilteil entsprechen wird, und daß daher die Verwendung eines Antennen-Diversity-Konzeptes in der Basisstation zwar gewisse Vorteile bringt, jedoch in manchen Fällen nicht ausreichend ist. Erfindungsgemäß wird daher ein DECT-Mobilteil geschaffen, das zumindest zwei Sende/Empfangsantennen aufweist, wobei, je nach Qualität des Übertragungskanals von der einen Sende/Empfangsantenne auf die andere Sende/Empfangsantenne im Mobilteil umgeschaltet werden kann, so daß ein Antennen-Diversity-Konzept im Mobilteil verwirklicht ist. Diese Umschaltung ist unabhängig von der Senderichtung möglich, so daß ein Mobilteil zum Senden durchaus die eine Antenne verwenden kann, während es zum Empfangen die andere Antenne verwendet, wenn die Anzahl der Antenne gleich zwei ist.

Üblicherweise besitzen Antennen einen Antennengewinn, d.h. es gibt Richtungen mit besseren bzw. schlechteren Empfangsund Sendeeigenschaften. Bei Geräten, deren Verwendungsposition bzw. Verwendungslage unbestimmt bzw. nicht änderbar ist, wie es bei DECT-Mobilteilen der Fall ist, bei denen die Antenne fest im Gerät angebracht ist und bei denen nicht vorhergesagt werden kann, in welcher Position sie beim Senden/Empfangen gehalten wird, ergeben sich Nachteile darin, daß kein omnidirektionaler Empfang möglich ist. Erfindungsgemäß hat das Mobilteil, dessen tatsächliche Verwendung bzw. Positionierung beim Senden/Empfangen völlig unbestimmt ist - es handelt sich eben um ein mobiles Sende/Empfangsgerät - eine zweite Sende/Empfangsantenne, derart, daß die Gesamtantennengewinncharakteristik des DECT-Mobilteils gewissermaßen an eine omnidirektionale Antennengewinncharakteristik zumindest angenähert wird. Selbst wenn, wie im Stand der Technik, in der DECT-Basisstation bereits ein Antennen-Diversity vorgesehen ist, ändert dies nichts an der Antennengewinncharakteristik des DECT-Mobilteils mit lediglich einer einzigen Antenne. Selbst wenn zwei oder mehr Sende/Empfangsantennen im DECT-Mobilteil vorgesehen werden, kann die Antennengewinncharakteristik des DECT-Mobilteils an eine in jeder Richtung zumindest ähnliche Antennengewinncharakteristik angenähert werden, wenn gleichzeitig die Kommunikationsverbindung bezüglich ihrer Qualität überwacht wird und bei Bedarf, d.h. bei zu schlechter Qualität, von einer Antenne auf eine andere Antenne umgeschaltet wird.

Bei autarken Mobilteilen und insbesondere bei fest eingebauten autarken Mobilteilen hat das Antennen-Diversity-Konzept den besonderen Vorteil, daß hier trotz Entfallen der menschlichen Regelschleife die Qualität der Kommunikationsverbindung verbessert wird. Bei fest eingebauten Mobilteilen muß bei entsprechender Anordnung der Antennen praktisch überhaupt nicht auf die Antennencharakteristik geachtet werden. Stattdessen kann der Einbau nach sonstigen Gegebenheiten erfolgen und wird nicht durch HF-Eigenschaften eingeschränkt.

Darüberhinaus führen Mehrwegeausbreitungen des Sendesignals zu Überlagerungen des Signals am Empfangspunkt. Im ungünstigsten Fall ergibt sich dadurch eine Auslöschung des Signals. Eine weitere Antenne am DECT-Mobilteil, die beispielsweise orthogonal zur bereits vorhandenen Antenne angeordnet wird, oder in einem günstigen Abstand, wie z. B. einem ungeraden Vielfachen von einem Viertel der Sende-Wellenlänge, angeordnet ist, dient dazu, daß Mehrwegeausbreitungen und destruktive Überlagerungen am Empfangspunkt verringert oder sogar unterbunden werden können, so daß auch im Falle von eigentlich ungünstigen Übertragungskanälen eine gute Übertragungsqualität sichergestellt wird. zusammengefaßt kann festgestellt werden, daß der Übertragungskanal zwischen der Basisstation und dem Mobilteil nicht symmetrisch ist, weshalb ein Antennen-Diversity-Konzept in der Basisstation, wie es im Standard vorgeschlagen wird, keine durchgreifende Abhilfe gegen destruktive Überlagerungen am DECT-Mobilteil schaffen wird.

Ein weiterer Vorteil des erfindungsgemäßen Diversity-Konzepts für das DECT-Mobilteil besteht darüberhinaus darin, daß keine Modifikationen an der Basisstation oder Vermittlungsstelle nötig sind. Wenn bei kleineren Anlagen die Basisstation direkt mit dem Netz verbunden ist, ohne daß eine eigene Vermittlungsstelle vorhanden ist, so muß ebenfalls keine Änderung an einer fest installierten Einrichtung durchgeführt werden. Lediglich Änderungen an Mobilteilen bzw. neue Mobilteile, die separat gekauft werden können, sind nötig.

Darüberhinaus sind keine Protokolländerungen oder ähnliches erforderlich, die in Einklang mit dem DECT-Standard gebracht werden müßten, sondern lediglich das Anbringen einer zweiten Antenne am Mobilteil und die entsprechende Einrichtung zum Feststellen der Qualität der Kommunikationsverbindung und zum Umschalten zwischen den Antennen, falls die Qualität unter einer bestimmten Qualität ist. Das DECT-Protokoll "merkt" somit nichts vom Antennen-Diversity im Mobilteil. Erfindungsgemäß wird somit eine Verbesserung der Übertragungsqualität erreicht, ohne daß die entsprechenden Schichten (PHL und MAC) des DECT-Standards angetastet werden müssen. Dies hat den Vorteil, daß die erfindungsgemäß ausgestatteten DECT-Mobilteile völlig standardkonform sind und somit auch als standardkonforme Geräte angeboten und verkauft werden können.

Die Qualität der Kommunikationsverbindung kann auf beliebige Art und Weise überwacht werden, z.B. durch die sowieso durchgeführte Fehlererkennung im Mobilteil, oder aber auch durch Informationen, die bereits standardgemäß von der Basisstation zu dem DECT-Mobilteil übermittelt werden, um dem DECT-Mobilteil ein "Feedback" über den Empfangskanal aus der Sicht der Basisstation zu übermitteln. Dieses Feedback wird über die Q1/Q2-Bits im A-Feld übertragen. Weitere Möglichkeiten, wie z.B. Feldstärkemessungen im DECT-Mobilteil auf analoger Ebene und dergleichen, können ebenfalls standardkonform integriert werden. Auch nicht-standardkonforme Signalisierungen von der Basisstation zum Mobilteil sind denkbar, haben jedoch den Nachteil, daß auch Modifikationen in der einzelnen Basisstation erforderlich sein können.

An dieser Stelle sei darauf hingewiesen, daß der Ausdruck "Mobilteil" nicht nur Mobiltelefone umfaßt, sondern auch mobile sonstige Sende/Empfangsgeräte, die eingangs aufgezählt wurden. Insbesondere soll der Ausdruck "Mobilteil" aber auch fest eingebaute Mobilteile umfassen, die über einen Funkkanal mit der Basisstation kommunizieren und somit Endgeräte eines DECT-Systems sind.

Weiterhin sei angemerkt, daß die vorliegende Erfindung nicht nur auf europäische DECT-Systeme anwendbar ist, die in der Physical Layer ein Band von 1,88 GHz bis 1,9 GHz definieren, sondern auch auf verbindungsorientierte Kommunikationssysteme gemäß sogenannten DECT-Derivaten, wie z. B. das amerikanische Derivat, das im Bereich von etwa 1,92 bis 1,93 GHz arbeitet und als PWT bezeichnet wird. Außerdem existieren auch asiatische DECT-Derivate, die wieder ein anderes Frequenzband haben. Allen DECT-Derivaten ist es gemeinsam, daß die Nachrichtenübertragung nach dem DECT-Standard stattfindet. Sie unterscheiden sich lediglich in den physikalischen Parametern des benutzten Funkfrequenzbands oder in der Modulation, welche sich von Derivat zu Derivat unterscheiden können.

Bevorzugte Ausführungsbeispiele der vorliegenden Erfindung werden nachfolgend bezugnehmend auf die beiliegenden Zeichnungen detaillierter erläutert. Es zeigen:
- Fig. 1: ein prinzipielles Blockschaltbild eines DECT-Mobilteils gemäß der vorliegenden Erfindung;
- Fig. 2A: ein Flußdiagramm zur Beschreibung der Funktion des in Fig. 1 gezeigten DECT-Mobilteils;
- Fig. 2B: ein Flußdiagramm zur Beschreibung einer alternativen Funktionsweise des in Fig. 1 gezeigten DECT-Mobilteils; und
- Fig. 3: ein Übersichtsdiagramm über eine Nachrichtenverbindung zwischen einem ersten Teilnehmer mit einem DECT-Mobilteil und einem zweiten Teilnehmer mit einem DECT-Mobilteil.

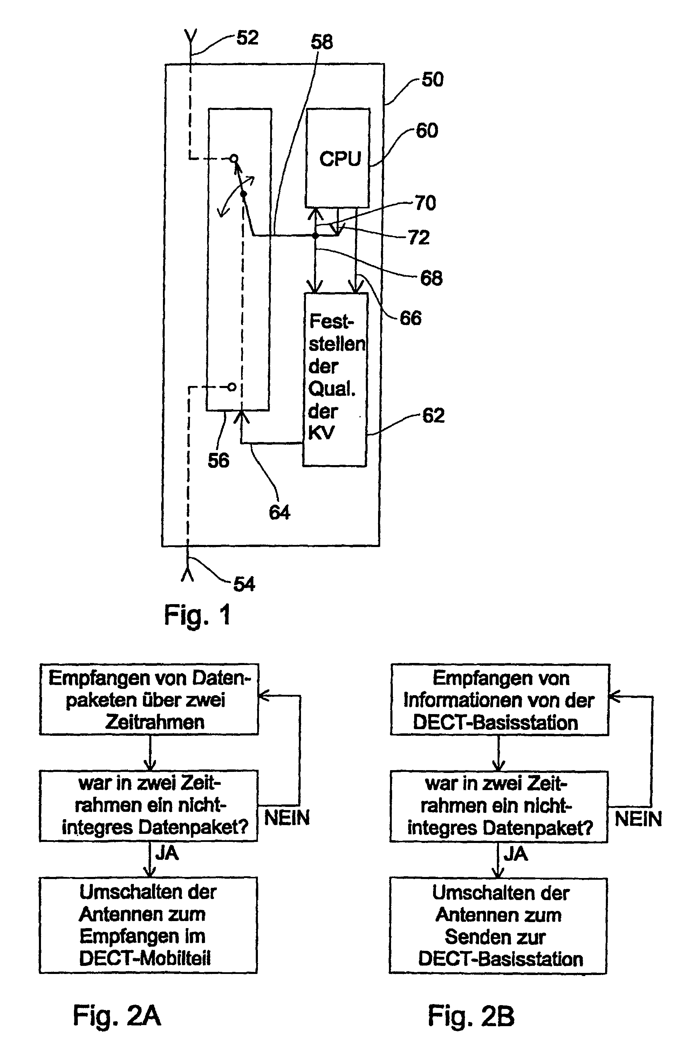

Fig. 1 zeigt ein erfindungsgemäßes DECT-Mobilteil 50, das eine erste Sende/Empfangsantenne 52 sowie eine zweite Sende/Empfangsantenne 54 aufweist, welche mit einem Schalter 56 verbunden sind, der angeordnet ist, um das Sendesignal oder das Empfangssignal auf einer Leitung 58 entweder zur ersten Sende/Empfangsantenne 52 oder zur zweiten Sende/Empfangsantenne 54 zu bringen bzw. von dort zu erhalten. Das DECT-Mobilteil umfaßt ferner eine mit CPU bezeichnete Zentraleinheit 60, die die üblichen Funktionen ausführt, wie z.B. die Fehlererkennung, um z.B. ein ARQ-Verfahren (ARQ = Automatic Repeat Request) durchzuführen. Darüberhinaus wird in der Zentraleinheit 60 die übliche Funktion des Umsetzens von Sprachsignalen oder Datensignalen in sendefähige Signale durchgeführt.

Das DECT-Mobilteil 50 gemäß der vorliegenden Erfindung umfaßt ferner eine Einrichtung 62 zum Feststellen der Qualität der Kommunikationsverbindung zwischen dem DECT-Mobilteil und einer DECT-Basisstation, um abhängig von der Qualität der Kommunikationsverbindung über eine Steuerleitung 64 die Umschalteinrichtung 56 anzusteuern, um von einer Sende/Empfangsantenne auf die andere Sende/Empfangsantenne umzuschalten.

Je nach Implementation kann die Einrichtung 62 zum Feststellen der Qualität der Kommunikationsverbindung entweder direkt mit der Zentraleinheit über eine Leitung 66 gekoppelt sein, um abhängig von der Fehlerüberprüfung, die gemäß dem DECT-Standard in der Zentraleinheit des Mobilteils durchgeführt wird, die Qualität der Kommunikationsverbindung festzustellen. Alternativ kann die Einrichtung 62 zum Feststellen der Qualität der Kommunikationsverbindung auch Informationen aus dem empfangenen Signal entnehmen, um auf der Basis der Feedback-Informationen der Basisstation die Qualität der Kommunikationsverbindung zwischen dem DECT-Mobilteil und der DECT-Basisstation festzustellen.

Selbstverständlich kann die Einrichtung 62 auch mit der Einrichtung 60 integriert sein, wobei in diesem Fall jedoch die gleichen Funktionalitäten verbleiben.

Die Zentraleinheit 60 ist mit den Antennen über einen Empfangspfad 70 und einen Sendepfad 72 verbunden.

Je nach Ausführungsbeispiel kann die Einrichtung 62 zum Feststellen der Qualität der Kommunikationsverbindung derart angeordnet sein, daß sie eine Antennenumschaltung abhängig von der Empfangsqualität im DECT-Mobilteil durchführt, oder aber abhängig von der Empfangs-Qualität in der DECT-Basisstation. Auf den ersten Fall bezieht sich das Flußdiagramm von Fig. 2A, während sich das Flußdiagramm in Fig. 2B auf den letzteren Fall bezieht.

Im nachfolgenden wird auf Fig. 2A näher eingegangen, in der die Qualität der Kommunikationsverbindung auf der Basis der Empfangsqualität im DECT-Mobilteil beurteilt wird. Es ist bekannt, daß gemäß dem DECT-Standard eine paketweise Datenübertragung stattfindet. Die Datenpakete sind hierbei in sog. Zeitrahmen oder "frames" organisiert. Gemäß einem bevorzugten Ausführungsbeispiel der vorliegenden Erfindung werden in der Einrichtung 62 immer zwei aufeinander folgende Zeitrahmen betrachtet, um abhängig von Fehlerüberprüfungssignalen, die die Zentraleinheit 60 beispielsweise unter Verwendung eines CRC-Tests (CRC = Cyclic Redundancy Check) durchführt, festzustellen, ob in zwei aufeinanderfolgenden Zeitrahmen jeweils ein nicht-integres Datenpaket war, d.h. ein Datenpaket, das z.B. aufgrund eines Störgeräusches oder einer Mehrwegeausbreitung und destruktiven Überlagerung an der gerade verwendeten Sende/Empfangsantenne nicht mehr mit der maximal zulässigen Bitfehlerrate empfangen und decodiert werden konnte. Falls zwei aufeinander folgende Zeitrahmen vorhanden waren, in denen jeweils zumindest ein nicht-integres Datenpaket war, wird die Umschalteinrichtung 56 über die Steuerleitung 64 von der Einrichtung 62 angesteuert, um auf die zumindest eine andere Sende/Empfangsantenne umzuschalten. Falls in einem Zeitrahmen lediglich integre Datenpakete waren, muß nicht umgeschaltet werden, da die Kommunikationsverbindung ausreichend gut ist.

Das Maß für die Qualität der Kommunikationsverbindung, bei dessen Unterschreitung in dem bezüglich Fig. 2A beschriebenen Ausführungsbeispiel der vorliegenden Erfindung umgeschaltet wird, besteht darin, daß in zwei aufeinander folgenden Zeitrahmen nicht-integre Datenpakete waren. Die vorliegende Erfindung ist jedoch nicht auf dieses vorbestimmte Maß begrenzt. So könnte bereits dann umgeschaltet werden, wenn in einem Zeitrahmen bereits ein fehlerhaftes Paket auftritt, oder aber auch wenn eine bestimmte Anzahl von hintereinander empfangenen Datenpaketen fehlerhaft war. Beliebige Alternativen und Kombinationen, z.B. mit der Empfangsfeldstärke an der Empfangsantenne, sind ferner möglich.

Die in Fig. 2A beschriebene Funktionsweise bezieht sich darauf, daß im DECT-Mobilteil abhängig von der Empfangsqualität am DECT-Mobilteil von einer Antenne auf die andere Antenne umgeschaltet wird. Alternativ kann auch abhängig von der Empfangsqualität in der DECT-Basisstation umgeschaltet werden. Hierzu können Informationen verwendet werden, die von der DECT-Basisstation als "Feedback"-Informationen übermittelt werden. Diese Informationen geben dem DECT-Mobilteil Aufschluß darüber, wie gut die vom DECT-Mobilteil ausgesendeten Daten in der DECT-Basisstation angekommen sind. Auch hier kann das gleiche vorbestimmte Maß für die Qualität der Kommunikationsverbindung verwendet werden, wie beim bezüglich Fig. 2A diskutierten Fall, jedoch nun auf den Empfang der DECT-Basisstation bezogen. Gemäß einem weiteren Ausführungsbeispiel der vorliegenden Erfindung können beide Konzepte auch kombiniert werden, so daß die Qualität der Kommunikationsverbindung sowohl basierend auf dem Empfang im DECT-Mobilteil als auch in der DECT-Basisstation festgestellt wird.

Falls die DECT-Basisstation, mit der das erfindungsgemäße DECT-Mobilteil kommuniziert, derart ausgelegt ist, daß sie zwei Sende/Empfangsantennen aufweist, zwischen denen hinund hergeschaltet werden kann, so empfiehlt es sich, bei der Antennenumschaltung im DECT-Mobilteil bestimmte Zeitkonstanten einzuhalten, damit es nicht zu unerwünschten Schwingungen bei der Antennenumschaltung in der Basisstation und im Mobilteil kommt. So ist es gemäß dem DECT-Standard vorgesehen, daß in der Basisstation bereits von einem Zeitrahmen auf den anderen Zeitrahmen zwischen den Antennen 31a, 31b (Fig. 3) umgeschaltet werden kann, d.h. daß eine Umschaltung mit sehr kurzen Zeitkonstanten stattfindet. Um der Schwingungsproblematik zu entgehen, kann entweder das vorbestimmte Maß für die Qualität der Kommunikationsverbindung derart bestimmt werden, daß immer zwei aufeinanderfolgende Zeitrahmen betrachtet werden, wodurch sich bereits automatisch eine längere Zeitkonstante bei der Umschaltung ergibt. Alternativ könnte jedoch auch ein Filter in der Steuerleitung 64 vorgesehen sein, um zu schnelle Umschaltungen, die durch das voreingestellte Maß für die Qualität der Kommunikationsverbindung eigentlich durchgeführt werden würden, zu unterdrücken, um lediglich langsamere Umschaltungen zuzulassen. Grundsätzlich kann festgestellt werden, daß zur Überwindung der Schwingungsproblematik vorzugsweise die Umschalt-Zeitkonstanten in der Basisstation und im Mobilteil voneinander verschieden sein sollten. Selbst wenn die zeitkonstanten jedoch gleich sein, könnten immer noch bestimmte Vorkehrungen getroffen werden, wenn eine Schwingungsproblematik auftritt, was z.B. an einer periodischen Wiederkehr von nicht-integren Datenpaketen ermittelt werden könnte.

## Patentansprüche

1. Sende/Empfangs-Endgerät (50) für ein verbindungsorientiertes Kommunikationssystem, das nach dem DECT-Standard oder einem Derivat desselben arbeitet, wobei das Sende/Empfangs-Endgerät (50) ausgebildet ist, um mit einer Basisstation, die eine Mehrzahl von Sende/Empfangsantennen aufweist, zu kommunizieren, mit folgenden Merkmalen:
einer Mehrzahl von Sende/Empfangsantennen (52, 54) zum Kommunizieren mit einer Basisstation (30c);
einer Einrichtung (62) zum Feststellen der Qualität einer Kommunikationsverbindung zwischen dem Sende/Empfangs-Endgerät (50) und der Basisstation (30c); und
einer Einrichtung (56) zum Umschalten von einer Sende/Empfangsantenne (52) auf eine andere Sende/Empfangsantenne (54), wobei die Einrichtung (62) zum Umschalten wirksam ist (64), um umzuschalten, wenn die Qualität der Kommunikationsverbindung unter einer vorbestimmten Schwelle ist, **dadurch gekennzeichnet, daß**
die Einrichtung (56) zum Umschalten angeordnet ist, um mit einer Zeitkonstante von der einen Sende/Empfangsantenne (52) auf die andere Sende/Empfangsantenne (54) umzuschalten, die sich von einer Zeitkonstante unterscheidet, mit der in der Basisstation von einer dortigen Sende/Empfangsantenne (31a) zu einer anderen dortigen Sende/Empfangsantenne (31b) gewechselt wird.

2. Sende/Empfangs-Endgerät (50) nach Anspruch 1,
bei dem die Einrichtung (62) zum Feststellen der Qualität der Kommunikationsverbindung angeordnet ist, um von der Basisstation (30c) empfangene Datenpakete auf ihre Integrität zu untersuchen, um die Qualität der Kommunikationsverbindung auf der Basis der Integrität der empfangenen Pakete festzustellen,
wobei die vorbestimmte Schwelle eine vorbestimmte Anzahl von nicht-integren Paketen in einer bestimmten Zeitspanne ist.

3. Sende/Empfangs-Endgerät (50) nach Anspruch 2,
bei dem die vorbestimmte Schwelle der Qualität der Kommunikationsverbindung durch zwei aufeinander folgende empfangene nicht-integre Datenpakete definiert ist;

4. Sende/Empfangs-Endgerät (50) nach Anspruch 2 oder 3, bei dem die Einrichtung (56) zum Umschalten angeordnet ist, um lediglich zum Empfangen von Datenpaketen von der Basisstation von einer Sende/Empfangsantenne (52) zu einer anderen Sende/Empfangsantenne (54) umzuschalten.

5. Sende/Empfangs-Endgerät (50) nach Anspruch 1,
bei dem die Einrichtung (62) zum Feststellen angeordnet ist, um von der Basisstation empfangene Informationen über die Integrität von von der Basisstation empfangenen Datenpaketen auszuwerten, um die Qualität der Kommunikationsverbindung auf der Basis der empfangenen Informationen festzustellen.

6. Sende/Empfangs-Endgerät (50) nach Anspruch 5, bei dem die vorbestimmte Schwelle der Qualität der Kommunikationsverbindung durch zwei aufeinander folgende, von der Basisstation empfangene nicht-integre Datenpakete definiert ist.

7. Sende/Empfangs-Endgerät (50) nach Anspruch 3 oder Anspruch 6,
bei dem statt der zwei aufeinander folgenden, nicht-integren Datenpakete zwei aufeinander folgende Zeitrahmen verwendet werden, in denen kein korrektes Paket festgestellt wird.

8. Sende/Empfangs-Endgerät (50) nach einem der vorhergehenden Ansprüche, das ein autarkes Endgerät und insbesondere ein fest eingebautes autarkes Endgerät ist.

9. Verfahren zum Kommunizieren zwischen einem Sende/Empfangs-Endgerät (50) mit zumindest zwei Sende/Empfangsantennen (52, 54), das für ein verbindungsorientiertes Kommunikationssysem vorgesehen ist, das nach dem DECT-Standard oder einem Derivat desselben arbeitet, und einer Basisstation (30c), die eine Mehrzahl von Sende/Empfangsantennen aufweist, mit folgenden Schritten:
Senden/Empfangen mit dem Sende/Empfangs-Endgerät (50) unter Verwendung einer Sende/Empfangsantenne (52);
im Sende/Empfangs-Endgerät (50), Feststellen (62) der Qualität der Kommunikationsverbindung; **gekennzeichnet durch**
Umschalten (56) von einer Sende/Empfangsantenne (52) auf eine andere Sende/Empfangsantenne (54), wenn die Qualität der Kommunikationsverbindung unter einer vorbestimmten Schwelle ist, wobei das Umschalten von der einen Sende/Empfangsantenne (52) auf die andere Sende/Empfangsantenne (54) mit einer Zeitkonstante durchgeführt wird, die sich von einer Zeitkonstante unterscheidet, mit der in der Basisstation von einer dortigen Sende/Empfangsantenne (31a) zu einer anderen dortigen Sende/Empfangsantenne (31b) gewechselt wird.

## Claims

1. A transmit-receive terminal (50) for a connection-oriented communication system operating according to the DECT standard or according to a derivative thereof, said transmit-receive terminal (50) being implemented for communicating with a base station provided with a plurality of transmit-receive antennas, comprising:
a plurality of transmit-receive antennas (52, 54) for communicating with a base station (30c);
a device (62) for determining the quality of a communications connection between the transmit-receive terminal (50) and the base station (30c); and
a means (56) for switching over from one transmit-receive antenna (52) to another transmit-receive antenna (54), said switch-over means (62) being effective (64) for switching over if the quality of the communications connection is below a predetermined threshold, **characterised by**
said switch-over means being arranged for switching over from one transmit-receive antenna (52) to the other transmit-receive antenna (54) with a time constant which differs from a time constant with which a change from one transmit-receive antenna (31a) of the base station to another transmit-receive antenna (31b) of the base station is effected in the base station.

2. A transmit-receive terminal (50) according to claim 1,
wherein the device (62) for determining the quality of the communications connection is arranged for examining data packets received from the base station (30c) with regard to their integrity so as to determine the quality of the communications connection on the basis of the integrity of the packets received,
the predetermined threshold being a predetermined number of unsound packets within a certain period of time.

3. A transmit-receive terminal (50) according to claim 2,
wherein the predetermined threshold of the quality of the communications connection is defined by two unsound data packets received in succession.

4. A transmit-receive terminal (50) according to claim 2 or 3,
wherein the switch-over means (56) is arranged for switching over from one transmit-receive antenna (52) to another transmit-receive antenna (54) for receiving only data packets from the base station.

5. A transmit-receive terminal (50) according to claim 1,
wherein the determining device (62) is arranged for evaluating information received from the base station with regard to the integrity of data packets received from said base station so as to determine the quality of the communications connection on the basis of the information received.

6. A transmit-receive terminal (50) according to claim 5,
wherein the predetermined threshold of the quality of the communications connection is defined by two unsound data packets received from the base station in succession.

7. A transmit-receive terminal (50) according to claim 3 or claim 6,
wherein, instead of the two successive unsound data packets, two successive time frames in which no correct packet is determined are used.

8. A transmit-receive terminal (50) according to one of the preceding claims, which is a self-sufficient terminal and especially a fixedly installed self-sufficient terminal.

9. A method for communicating between a transmit-receive terminal (50) including at least two transmit-receive antennas (52, 54) and provided for a connection-oriented communication system, which operates according to the DECT standard or according to a derivative thereof, and a base station (30c) provided with a plurality of transmit-receive antennas, comprising the following steps:
transmitting/receiving by means of the transmit-receive terminal (50) making use of a transmit-receive antenna (52);
determining (62) in said transmit-receive terminal (50) the quality of the communications connection; **characterised by**
switching over (56) from one transmit-receive antenna (52) to another transmit-receive antenna (54) if the quality of the communications connection is below a predetermined threshold, said switching over from one transmit-receive antenna (52) to the other transmit-receive antenna (54) being effected with a time constant which differs from a time constant with which a change from one transmit-receive antenna (31a) of the base station to another transmit-receive antenna (31b) of the base station is effected in the base station.

## Revendications

1. Terminal émetteur/récepteur (50) pour un système de communication orienté sur la connexion et fonctionnant selon la norme DECT ou un dérivé de celle-ci, le terminal émetteur/récepteur (50) étant réalisé pour communiquer avec une station de base présentant une pluralité d'antennes d'émission/réception, aux caractéristiques suivantes :
une pluralité d'antennes d'émission/réception (52, 54) pour communiquer avec une station de base (30c) ;
un dispositif (62) destiné à constater la qualité d'une connexion de communication entre le terminal émetteur/récepteur (50) et la station de base (30c) ; et
un dispositif (56) destiné à commuter d'une antenne d'émission/réception (52) à une autre antenne d'émission/réception (54), le dispositif (62) pour commuter étant actif (64) pour commuter lorsque la qualité de la connexion de communication se situe au-dessous d'un seuil déterminé,
**caractérisé par le fait que**
le dispositif (56) destiné à commuter est disposé pour commuter d'une antenne d'émission/réception (52) à l'autre antenne d'émission/réception (54) avec une constante de temps qui se différencie d'une constante de temps avec laquelle s'effectue le changement à la station de base d'une antenne d'émission/réception (31a) y présente à une autre antenne d'émission/réception (31b) y présente.

2. Terminal émetteur/récepteur (50) selon la revendication 1, dans lequel le dispositif (62) destiné à constater la qualité d'une connexion de communication est disposé pour examiner quant à leur intégrité des paquets de données reçus de la station de base (30c), pour constater la qualité de la connexion de communication sur base de l'intégrité des paquets reçus,
le seuil prédéterminé étant un nombre prédéterminé de paquets non intègres dans un laps de temps déterminé.

3. Terminal émetteur/récepteur (50) selon la revendication 2, dans lequel le seuil prédéterminé de la qualité de la connexion de communication est défini par deux paquets de données non intègres reçus successifs.

4. Terminal émetteur/récepteur (50) selon la revendication 2 ou 3, dans lequel le dispositif (56) de commutation est disposé pour commuter d'une antenne d'émission/réception (52) à une autre antenne d'émission/réception (54) uniquement pour recevoir des paquets de données de la station de base.

5. Terminal émetteur/récepteur (50) selon la revendication 1, dans lequel le dispositif (62) pour constater est disposé pour évaluer les informations reçues de la station de base relatives à l'intégrité des paquets de données reçus de la station de base, pour constater la qualité de la connexion de communication sur base des informations reçues.

6. Terminal émetteur/récepteur (50) selon la revendication 5, dans lequel le seuil prédéterminé de la qualité de la connexion de communication est défini par deux paquets de données non intègres successifs reçus de la station de base.

7. Terminal émetteur/récepteur (50) selon la revendication 3 ou la revendication 6, dans lequel il est utilisé, au lieu des deux paquets de données non intègres successifs, deux fenêtres de temps successives dans lesquelles il n'est pas constaté de paquet correct.

8. Terminal émetteur/récepteur (50) selon l'une des revendications précédentes, qui est un terminal autarque et, en particulier, un terminal autarque incorporé de manière fixe.

9. Procédé pour communiquer entre un terminal émetteur/récepteur (50) avec au moins deux antennes d'émission/réception (52, 54) prévu pour un système de communication orienté sur la connexion, fonctionnant selon la norme DECT ou un dérivé de celle-ci, et une station de base (30c) présentant une pluralité d'antennes d'émission/réception, aux étapes suivantes consistant à :
dans le terminal émetteur/récepteur (50), constater (62) la qualité de la connexion de communication ;
**caractérisé par**
la commutation (56) d'une antenne d'émission/réception (52) à une autre antenne d'émission/réception (54) lorsque la qualité de la connexion de communication se situe au-dessous d'un seuil déterminé, la commutation d'une antenne d'émission/réception (52) à l'autre antenne d'émission/réception (54) s'effectuant avec une constante de temps qui se différencie d'une constante de temps avec laquelle s'effectue le changement à la station de base d'une antenne d'émission/réception (31a) y présente à une autre antenne d'émission/réception (31b) y présente.
